Europäisches Patentamt

European Patent Office

Office européen des brevets

(19)

(11) Veröffentlichungsnummer: **0 001 995**
**B1**

(12) **EUROPÄISCHE PATENTSCHRIFT**

(21) Anmeldenummer: **78101246.3**

(22) Anmeldetag: **28.10.78**

(51) Int. Cl.³: **B 01 J 37/12, C 01 G 3/02, B 01 J 23/72, // C 07 F 7/16, B 22 F 1/00**

(54) Verfahren zur Herstellung von Katalyt-Kupfer, nach dem Verfahren hergestelltes Katalyt-Kupfer und dessen Verwendung als Katalysator für die Organochlorsilanerzeugung

(30) Priorität: **11.11.77 DE 2750556**

(43) Veröffentlichungstag der Anmeldung:
**30.05.79 Patentblatt 79/11**

(45) Bekanntmachung des Hinweises auf die Patenterteilung:
**07.01.81 Patentblatt 81/01**

(84) Benannte Vertragsstaaten:
**BE DE FR GB**

(56) Entgegenhaltungen:
**DE - A - 2 214 611
DE - C - 844 902
SU - A - 160 182
US - A - 2 383 818
US - A - 2 420 540
US - A - 2 565 347**

(73) Patentinhaber: **BAYER AG
Zentralbereich Patente, Marken und Lizenzen
D - 5090 Leverkusen 1, Bayerwerk (DE)**

(72) Erfinder: **Maas, Joachim, Dr.
Im Wohnpark 5
D - 5010 Bergheim/Ahe (DE)
Mundil, Rudolf, Dr.
Berta-von-Suttner-Strasse 3
D - 5090 Leverkusen 1 (DE)
Degen, Bruno, Dr.
Broicher Feld 2
D - 5060 Bergisch-Gladbach 2 (DE)
Moretto, Hans-Heinrich, Dr.
Formesstrasse 13
D - 5000 Koeln 80 (DE)**

Verfahren zur Herstellung von Katalyt-Kupfer, nach dem Verfahren hergestelltes Katalyt-Kupfer und dessen Verwendung als Katalysator für die Organochlorsilanerzeugung

Die vorliegende Erfindung betrifft ein Verfahren zur Herstellung von Katalyt-Kupfer, das insbesondere bei der Umsetzung von Kohlenwasserstoffchloriden mit Silicium zum Zwecke der Organochlorsilanerzeugung (Rochow-Synthese) eingesetzt werden kann.

Die für die Durchführung der Rochow-Synthese geeigneten Kupfersorten werden u.a. durch Elektrolyse einer Cu-Salzlösung, Verdüsen einer Cu-Schmelze, mechanische Zerkleinerung von großstückigem Cu oder durch Fällung von Cu aus Cu-Salzlösungen mit entsprechenden Reduktionsmitteln hergestellt, wobei zur Reduktion der Kupferionen auch unedlere Metalle wie z.B. Eisen (sogenannte Zementation von Kupfer) verwendet werden können.

Die US-Patente 2 383 818 und 2 464 033 erwähnen, daß z.B. die Dotierung von Kupferoxiden die Rochow-Synthese katalysiert, ohne jedoch auf die Art der eigentlichen Oxidherstellung näher einzugehen.

Es ist jedoch bereits bekannt, daß eine derartige Dotierung einen sehr wesentlichen Einfluß auf den Verlauf der Katalyse hat. So katalysiert handelsübliches $Cu_2O$ oder $CuO$ die Rochow-Synthese weit weniger als z.B. der nach dem erfindungsgemäßen Verfahren hergestellte Katalysator.

Die US-Patentschrift 2 420 540 beschreibt die Darstellung eines kupferhaltigen Pulvers, das gemäß US-Patent 2 443 902 mit Erfolg als Katalysator bei der Organochlorsilansynthese nach Rochow verwendet werden kann. Bei diesem Pulver handelt es sich um ein dendritisches Zementkupfer, das durch eine oxidierende Heißmahlung in Gegenwart eines Verbrennungsgas/Luft-Gemisches in einer Mahlanlage an der Oberfläche in Kupferoxide, vorzugsweise Cu(I)-oxid, überführt wird.

Diese Mahlprozeß erlaubt nicht nur eine Zerkleinerung des Zementkupfers auf die gewünschte Korngröße von wenigen $\mu$m, sondern stellt gleichzeitig auch die angewendete Temperatur von ca. 370 bis 540°C durch einen Trocknungsprozeß für das nasse, ca. 10% Restfeuchte enthaltende Zementkupfer dar.

Die Herstellung des Cu-Katalysators entsprechend US-Patent 2 420 540 hat jedoch den Nachteil, daß die Zusammensetzung des Verbrennungsgases schwanken kann, was wechselnde Katalysatorqualitäten bedeutet. Besonders reduzierte Bestandteile des Gases wie z.B. CO beeinflussen die Wirksamkeit des enstehenden kupferhaltigen Pulvers negativ. Variierende Feuchtigkeitsgehalte des eingesetzten Roh-Zementkupfers tragen ebenfalls zu Qualitäts-Schwankungen der erzeugten Katalysatoren bei.

Es wurde nun ein Verfahren zur Herstellung eines bei der Rochow-Synthese wirksamen Katalyt-Kupfers gefunden, das dadurch gekennzeichnet ist, daß Cu-Pulver bei einem gegenüber dem der Luft verminderten Sauerstoffpartialdruck bei Temperaturen zwischen 100 und 1000°C nachoxidiert wird.

Überraschenderweise stellte sich heraus, daß bei der erfindungsgemäßen Durchführung des Oxidationsprozesses die Ausbeute an Dimethyldichlorsilan wesentlich verbessert werden kann, wobei dieser Effekt auf der Erhöhung der Dimethyldichlorsilanselektivität des Katalysators und/oder auf der Steigerung der Rohsilanausbeute beruht.

Das erfindungsgemäße Verfahren ist nicht nur für die Nachoxidation von Zementkupferpulvern geeignet, sondern kann mit Erfolg bei Cu-Pulvern unterschiedlicher Provenienz angewendet werden.

Als Ausgangssubstanzen lassen sich handelsübliche Pulver verwenden, die z.B. durch eine mechanische Zerkleinerung von Kupfer oder durch Verdüsen einer Cu-Schmelze erzeugt worden sind.

Auch die Elektrolyse von Cu-Salzlösungen, die Reduktion von Kupfersalzlösungen mit geeigneten Reduktionsmitteln oder Disproportionierungsreaktionen von Cu(I)-Salzen kommen für die Herstellung entsprechender Ausgangsmaterlien in Frage. Die Korngröße des bei der Nachoxidation eingesetzten Produktes soll vorzugsweise zwischen etwa 0,1 und 100 $\mu$m liegen.

Die Oxidation wird am einfachsten mit Stickstoff/Luft-Gemischen durchgeführt, deren Sauerstoffgehalt zwischen 0,1 und 15%, vorzugsweise zwischen ca. 0,5 und 8% liegt. Statt Stickstoff können auch andere, nicht reduzierend wirkende Gase wie z.B. $CO_2$ oder Edelgas verwendet werden. Wie unten anhand eines Beispiels demonstriert wird, übt das Vorhandensein von Gasen wie CO oder $H_2$, die die während des Oxidationsprozesses gebildeten Kupferoxide reduzieren können, einen negativen Einfluß auf das Katalysatorverhalten aus.

Es ist möglich, als Sauerstofflieferanten statt Luft auch reinen Sauerstoff zu benutzen.

Der verminderte Sauerstoffpartialdruck kann ebenso durch den Einsatz von Sauerstoff bei einem Druck von etwa 0,001 bis 0,2 bar ohne Dotierung eines weiteren Gases realisiert werden.

Reaktionstemperatur, Sauerstoffpartialdruck und Verweilzeit des Kupfers in der Reaktionszone hängen beim erfindungsgemäßen Verfahren etwas voneinander ab. So beträgt z.B. die Oxidationsdauer bein 100—400°C und höheren Partialdrucken in der Regel etwa 5 bis 40 Minuten, bei 700—1000°C jedoch nur wenige Sekunden. Entsprechend müssen für Temperaturen zwischen 400 und 700°C wenige Sekunden bis wenige Minuten veranschlagt werden.

Bei niedrigen Partialdrucken des Sauerstoffe wie z.B. 0,002 oder 0,02 bar muß auch bei hohen Temperaturen mit einer längeren Einwirkungsdauer gerechnet werden, um den angestrebten Erfolg zu erreichen.

Die Oxidation des Kupfers kann geeigneterweise im Fließbett oder Rührbett erfolgen. Es ist aber auch möglich, ein mit Feststoff beladenes Gas gewünschter Zusammensetzung durch einen heißen Reaktionsraum zu leiten oder aber das Pulver durch Kontakt mit aufgeheiztem Gas zu oxidieren.

Beim Betrieb eines Fließ- oder Rührbettes kann die Sinkgeschwindigkeit einzelner Cu-Teilchen durch das einströmende Gas überschritten werden, so daß im allgemeinen ein Abscheider (Zyklon, Filter) hinter dem Reaktionsgefäß angebracht werden muß.

Unbedingt erforderlich ist das Nachschalten eines Zyklons, wenn die Trennung von Feststoff-Gas-Gemischen notwendig ist, wie sie bei der kurzzeitigen Nachoxidation von Cu-Pulvern z.B. im heißen Rohr anfallen.

Eventuell durch die Oxydation erzeugte Agglomerate lassen sich durch eine anschließende Mahlung z.B. in einer Kugel-, Stift- oder Hammermühle zerstören.

Das erfindungsgemäße Verfahren läßt sich auch z.B. direkt in einer beheizten Hammermühle durchführen.

Die Prüfung der Katalysatoren auf katalytische Wirksamkeit erfolgt, indem 20 g eines Siliciums (Analyse: 98,40% Si; 1,00% Fe; 0,36% Al; 0,14% Ca) der Korngrößenverteilung

$< 36~\mu m~(31,3\%)$

$36 - 71~\mu m~(22,6\%)$

$71 - 100~\mu m~(17,8\%)$

$100 - 160~\mu m~(18,0\%)$

$> 160~\mu m~(10,3)$

sowie 1,6 g Katalysator und 0,02 g Zink (als Promotor) in einem Laborfestbettreaktor mit 760 ml/h $CH_3Cl$ bei 2 bar und 360—280°C umgesetzt werden. Um die Induktionsperiode zu verkürzen, läßt man die Reaktion bei 360°C anspringen und senkt danach die Temperatur während der ersten beiden Stunden um je 10°C, anschließend stündlich um je 15°C bis die 280°C-Marke erreicht ist.

Der Laborfestbettreaktor ist ein mit Vibrator und Erhitzer versehenes zylindrisches Glasrohr von 17 mm innerem Durchmesser und 350 mm Länge, in das von unten Methylchlorid über den aufgeschichteten Si/Cu-Kontakt eingeleitet wird. Zur Abscheidung der erzeugten Silane dient ein mit einem Kühler versehenes Sammelgefäß, das mit dem Reaktor gekoppelt ist. Das erhaltene Produkt wird gewogen und gaschromatographisch analysiert.

Anhand der folgenden Beispiele soll das erfindungsgemäße Verfahren näher erläutert werden.

Beispiele 1 und 2 zeigen, daß durch eine erfindungsgemäße Cu-Nachoxydation mit Gasgemischen, deren Sauerstoffanteil gegenüber dem der Luft vermindert ist, eine Steigerung der Dimethyldichlorsilanselektivität des Katalysators in Bezug auf das nichtbehandelte Cu-Pulver möglich ist. Damit verbunden ist eine Erhöhung der Dimethyldichlorsilan-Ausbeute im betrachteten Versuchszeitraum. Wenn als Oxidationsmittel Luft verwendet wird (Beispiel 3), ist eine Aktivierung nicht nur nicht zu erreichen, sondern es erfolgt ein zusätzlicher Abfall der katalytischen Aktivität des so oxydierten Kupfers gegenüber dem ursprünglichen Material.

Ersetzt man den Stickstoff im Beispiel 2 durch Kohlenmonoxid, einem typischen Bestandteil von Verbrennungsgasen und oxidiert unter sonst gleichen Bedingungen, fallen Selektivität und Dimethyldichlorsilanausbeute der dann erhaltenen Katalysatoren unter das Niveau des Ausgangsproduktes (Beispiel 4).

Im Beispiel 5 und 6 werden Cu-Pulver bei hohen Temperaturen und kurzen Verweilzeiten bzw. bei stark verringertem Sauerstoffpartialdruck oxidiert.

Beispiel 1

Als Rührbettreaktor wird ein mit Thermoelement und Lochboden versehenes zylindrisches V 2 A-Rohr von 600 mm Höhe und 30 mm innerem Durchmesser benutzt, in das ein Flügelrührer aus gleichem Material so eintaucht, daß die Rührbewegungen dicht über dem Lochboden stattfinden. Der in das zylindrische V2A-Rohr eingepaßte Lochboden besteht aus 2 aufeinandergenieteten kreisförmigen V2A-Scheiben, die je 39 äquidistante, jeweils gegenüberliegende Öffnungen von 1 mm. Durchmesser aufweisen. Zwischen den beiden Scheiben befindet sich eine V2A-Gaze von 0,05 mm Maschenweite, die vor dem Zusammennieten der beiden Scheiben zwischen diese eingelegt wird und ein Durchfallen des Cu-Pulvers verhindert. Am Kopf ist der Reaktor durch einen Deckel, in dem sich die Rührführung (Stopfbuchse) befindet, nach außen hin abgeschlossen. Ein Rohr von ca. 5 mm Durchmesser am Reaktorkopf erlaubt ein Austreten der Reaktionsgase, wobei diese ein Filter passieren.

Die Gasdosierung erfolgt mittels geeichter Strömungsmesser. Das Gasgemisch tritt unterhalb des Lochbodens in den Reaktor ein. Eine Quarzwolleschicht, die sich unterhalb des Lochbodens befindet, verhindert ein eventuelles Durchtreten von Feststoff bei Stillstand. Das Rührbett ist von einem elektrisch beheizbaren Ofen umgeben, dessen Temperatur regelbar ist.

30 g eines marktüblichen, durch mechanische Zerkleinerung von Kupfer hergestellten Kupfer-

# 0 001 995

pulvers einer Korngröße von 0,1 bis 10 $\mu$m, einer BET-Oberfläche von

$$1,5 \; \frac{m^2}{g}$$

sowie einem Sauerstoffgehalt von 2,0% werden in dem Reaktionsgefäß vorgelegt und bei 200°C 10 Minuten mit 50 l/h eines Gasgemisches oxidiert, das 0,7 Vol.-% $O_2$ und 99,3 Vol.-% $N_2$ enthält. Der Sauerstoffgehalt des Pulvers steigt hierbei auf 2,2%.

In der folgenden Tabelle wird die Aktivität des nach dem erfindungsgemäßen Verfahrens hergestellten Katalysators mit der des nichtbehandelten Produktes verglichen, wobei die Prüfung beider Cu-Pulver in oben erwähntem Laborfestbettreaktor unter gleichen Bedingungen stattfand.

Tabelle Ib gibt die Prüfungsergebnisse zweier handelsüblicher Katalysatorsorten wieder.

Tabelle Ia

Original-Kupferpulver

| Stunden nach Anspringen der Reaktion | 1 | 2 | 3 | 4 | 5 | 6 | 7 | $\Sigma$ |
|---|---|---|---|---|---|---|---|---|
| Temperatur °C | 350 | 340 | 325 | 310 | 295 | 280 | 280 | |
| Rohsilanausbeute g Silan/h | 1,55 | 1,82 | 1,88 | 1,87 | 1,84 | 1,54 | 1,19 | 11,7 |
| $(CH_3)_2SiCl_2$ im Rohsilan, Gew.-% | 47,8 | 48,9 | 49,2 | 63,5 | 75,7 | 81,3 | 84,6 | |
| $CH_3SiCl_3$ im Rohsilan, Gew.-% | 36,5 | 35,4 | 32,5 | 24,1 | 15,9 | 12,5 | 10,4 | |
| $(CH_3)_2SiCl_2$-Ausbeute g $(CH_3)_2SiCl_2$/h | 0,74 | 0,89 | 0,92 | 1,19 | 1,39 | 1,25 | 1,01 | 7,4 |

Oxydiertes Kupferpulver

| Stunden nach Anspringen der Reaktion | 1 | 2 | 3 | 4 | 5 | 6 | 7 | $\Sigma$ |
|---|---|---|---|---|---|---|---|---|
| Temperatur °C | 350 | 340 | 325 | 310 | 295 | 280 | 280 | |
| Rohsilanausbeute g Silan/h | 1,70 | 2,03 | 1,98 | 1,91 | 1,93 | 1,68 | 1,54 | 12,8 |
| $(CH_3)_2SiCl_2$ im Rohsilan, Gew.-% | 53,3 | 56,4 | 57,2 | 74,9 | 82,0 | 86,4 | 87,0 | |
| $CH_3SiCl_3$ im Rohsilan, Gew.-% | 36,0 | 32,7 | 27,2 | 16,3 | 11,2 | 8,5 | 8,0 | |
| $(CH_3)_2SiCl_2$-Ausbeute g $(CH_3)_2SiCl_2$/h | 0,91 | 1,14 | 1,13 | 1,43 | 1,58 | 1,45 | 1,34 | 9,0 |

4

Tabelle Ib

Handelsübliche Kupferkatalysatoren
(Hersteller Fa. Pitt Metals, Partie 50)

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute g Silan/h | 1,67 | 1,70 | 1,79 | 1,61 | 1,38 | 0,99 | 0,76 | 9,9 |
| $(CH_3)_2SiCl_2$ im Rohsilan, Gew.-% | 29,6 | 39,0 | 48,9 | 60,7 | 69,1 | 74,9 | 78,4 | |
| $CH_3SiCl_3$ im Rohsilan, Gew.-% | 54,9 | 47,8 | 40,9 | 32,8 | 26,2 | 19,7 | 15,7 | |
| $(CH_3)_2SiCl_2$-Ausbeute g $(CH_3)_2SiCl_2$/h | 0,49 | 0,66 | 0,88 | 0,98 | 0,95 | 0,74 | 0,60 | 5,3 |

Handelsübliche Kupferkatalysatoren
(Hersteller Fa. Chemet, Partie 10)

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute g Silan/h | 1,78 | 1,97 | 1,84 | 1,66 | 1,61 | 1,12 | 0,94 | 10,9 |
| $(CH_3)_2SiCl_2$ im Rohsilan, Gew.-% | 42,5 | 52,4 | 56,1 | 63,3 | 69,2 | 76,9 | 80,2 | |
| $CH_3SiCl_3$ im Rohsilan, Gew.-% | 40,0 | 31,1 | 29,1 | 24,5 | 21,8 | 16,4 | 14,5 | |
| $(CH_3)_2SiCl_2$-Ausbeute g $(CH_3)_2SiCl_2$/h | 0,76 | 1,03 | 1,03 | 1,05 | 1,11 | 0,86 | 0,75 | 6,6 |

Beispiel 2

30 g des in Beispiel 1 verwendeten Cu-Pulvers werden in der dort beschriebenen Apparatur bei 200°C 20 Minuten mit 50 l/h eines Gasgemisches aus 2 Vol.-% $O_2$ und 98 Vol.-% $N_2$ nachbehandelt. Der Sauerstoffgehalt des Reaktionsproduktes beträgt 2,6%.

Im Laborreaktor zeigt der gewonnene Katalysator anschließend unter den gleichen Prüfbedingungen wie der in Beispiel 1 erzeugte folgendes Verhalten:

Tabelle II

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute, g Silan/h | 1,65 | 1,88 | 1,75 | 1,75 | 1,55 | 1,37 | 1,13 | 10,9 |
| $(CH_3)_2SiCl_2$ im Rohsilan, Gew.-% | 50,7 | 55,1 | 62,7 | 72,8 | 78,9 | 84,3 | 86,2 | |
| $CH_3SiCl_3$ im Rohsilan, Gew.-% | 34,5 | 28,8 | 22,2 | 15,2 | 12,3 | 9,4 | 8,4 | |
| $(CH_3)_2SiCl_2$-Ausbeute g $(CH_3)_2SiCl_2$/h | 0.84 | 1,04 | 1,10 | 1,27 | 1,22 | 1,15 | 0,97 | 7,6 |

Beispiel 3 (Vergleichsbeispiel)

30 g des in Beispiel 1 und 2 eingesetzten Kupfers werden in die gleiche Nachoxidationsanlage eingefüllt und bei 200°C 20 Minuten mit 50 l/h Luft umgesetzt. Das nachoxidierte Pulvers enthält 13,6% Sauerstoff. Tabelle III macht deutlich, daß die katalytische Aktivität des erhaltenen Produktes, eingesetzt in den Testreaktor, unter die des Ausgangsmaterials sinkt.

Tabelle III

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute, g Silan/h | 1,08 | 1,52 | 1,63 | 1,43 | 1,26 | 1,10 | 0,87 | 8,9 |
| $(CH_3)_2SiCl_2$ im Rohsilan, Gew.-% | 48,8 | 54,7 | 57,7 | 63,3 | 71,8 | 78,4 | 82,6 | |
| $CH_3SiCl_3$ im Rohsilan, Gew.-% | 35,5 | 28,1 | 23,8 | 20,0 | 15,9 | 12,3 | 10,8 | |
| $(CH_3)_2SiCl_2$-Ausbeute, g $(CH_3)_2SiCl_2$/h | 0,53 | 0,83 | 0,94 | 0,91 | 0,90 | 0,86 | 0,72 | 6,2 |

Beispiel 4 (Vergleichsbeispiel)

30 g des in Beispiel 1 bis 3 benutzten Pulvers werden in der bekannten Apparatur bei 200°C 20 Minuten mit 50 l/h eines Gasgemisches oxidiert, das 2 Vol.-% $O_2$, 8 Vol.-% $N_2$ und 90 Vol-% CO enthält. Durch die Oxidation erhöht sich der Sauerstoffgehalt des Kupfers auf 2,1%. Die Prüfung des erhaltenen Katalysators im Laboratorium unter den gleichen Bedingungen wie oben zeigt, daß sich die Selektivität verschlechtert hat.

Tabelle IV

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute g Silan/h | 1,69 | 1,97 | 1,76 | 1,63 | 1,75 | 1,58 | 1,33 | 11,7 |
| $(CH_3)_2SiCl_2$ im Rohsilan, Gew.-% | 45,9 | 41,2 | 46,6 | 60,6 | 70,0 | 74,5 | 79,8 | |
| $CH_3SiCl_3$ im Rohsilan, Gew.-% | 39,3 | 42,7 | 38,1 | 29,2 | 22,9 | 18,9 | 15,2 | |
| $(CH_3)_2SiCl_2$-Ausbeute g $(CH_3)_2SiCl_2$/h | 0,78 | 0,81 | 0,82 | 0,99 | 1,23 | 1,18 | 1,06 | 6,9 |

Beispiel 5

50 g des gleichen Kupferpulvers, wie es für Beispiel 1 bis 4 verwendet wurde, werden über eine Dosiervorrichtung in ein vertikales Rohr von 60 mm Durchmesser und 2000 mm Länge geschleust, das durch 2 aufklappbare Röhrenöfen elektrisch beheizt werden kann. Nackdem das Pulver die Oxidationszone passiert hat, durchläuft es eine Wassergekühlte Kühlstrecke von 1000 mm Länge und wird danach durch einen nachgeschalteten Zyklon abgeschieden. Ein am Ausgang der Apparatur befindlicher Glaswollefilter verhindert das Austreten von nichtabgeschiedenem Produkt in die Atomosphäre.

Das für Oxidation und Feststofftransport benötigte Gas tritt am Kopf der Anlage durch eine Düse oberhalb der Heizstecke in das Fallrohr ein. Die Temperaturmessung erfolgt mit Thermoelementen, die von dem mit Feststoff beladenen Gas umspült werden.

Die Nachoxidation findet bei 900°C mit 1 $\frac{m^3}{h}$ eines $N_2/O_2$-Gemisches statt, dessen $O_2$-Gehalt 6,1% beträgt. Das Reaktionsprodukt weist einen Sauerstoffgehalt von 5,8% auf.

Tabelle V gibt die im Laborreaktor gemessene Aktivität des so behandelten Katalysators wieder.

## Tabelle V

| Stunden nach Anspringen der Reaktion | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute, g Silan/h | 1,87 | 1,99 | 2,12 | 2,71 | 2,20 | 1,82 | 1,58 | 14,3 |
| $(CH_3)_2SiCl_2$ im Rohsilan, Gew.-% | 41,9 | 45,8 | 51,7 | 65,0 | 71,4 | 76,2 | 80,0 | |
| $CH_3SiCl_3$ im Rohsilan, Gew.-% | 42,4 | 38,2 | 32,7 | 24,7 | 19,9 | 16,4 | 13,7 | |
| $(CH_3)_2SiCl_2$-Ausbeute, g $(CH_3)_2SiCl_2$/h | 0,78 | 0,91 | 1,10 | 1,76 | 1,57 | 1,39 | 1,26 | 8,8 |

## Beispiel 6

30 g eines durch Verdüsen einer Kupferschmelze erzeugten Metallpulvers, das eine Korngröße von 10—100 $\mu$m, eine BET-Oberfläche von 0,4 $\frac{m^2}{g}$ und einen Sauerstoffgehalt von 0,4% besitzt, werden in der in Beispiel 1 beschriebenen Apparatur bei 600°C 40 Minuten mit 400 ml $O_2$/h oxidiert. Dabei wird so vorgegangen daß durch kontinuierliches Absaugen des in den Reaktionsraum eintretenden Sauerstoffs in diesem während der Oxidationsdauer ein Druck von 0,004 bar eingestellt wird. Das so behandelte Pulver enthält 0.8% Sauerstoff.

Das erhaltene Produkt wird auf beschriebene Weise geprüft. Tabelle VI stellt die katalytischen Eigenschaften des Ausgangsmaterials denen des nachbehandelten Pulvers gegenüber.

## Tabelle VI

### Original-Kupferpulver

| Stunden nach Anspringen | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute g Silan/h | 1,41 | 1,42 | 1,21 | 0,60 | 0,32 | 0,17 | 0,07 | 5,2 |
| $(CH_3)_2SiCl_2$ im Rohsilan, Gew.-% | 36,5 | 31,3 | 41,6 | 46,2 | 52,5 | 60,1 | 73,5 | |
| $CH_3SiCl_3$ im Rohsilan, Gew.-% | 53,1 | 49,4 | 49,9 | 48,0 | 43,3 | 36,6 | 23,1 | |
| $(CH_3)_2SiCl_2$-Ausbeute g $(CH_3)_2SiCl_2$/h | 0,51 | 0,44 | 0,50 | 0,28 | 0,17 | 0,10 | 0,05 | 2,1 |

### Oxidiertes Kupfer

| Stunden nach Anspringen | 1 | 2 | 3 | 4 | 5 | 6 | 7 | Σ |
|---|---|---|---|---|---|---|---|---|
| Temperatur °C | 350 | 340 | 325 | 310 | 295 | 280 | 280 | |
| Rohsilanausbeute g Silan/h | 1,52 | 1,60 | 1,56 | 1,13 | 0,65 | 0,66 | 0,18 | 7,3 |
| $(CH_3)_2SiCl_2$ im Rohsilan, Gew.-% | 41,3 | 60,4 | 70,3 | 79,4 | 83,8 | 85,4 | 84,3 | |
| $CH_3SiCl_3$ im Rohsilan, Gew.-% | 43,9 | 26,1 | 18,9 | 12,8 | 10,5 | 10,7 | 11,3 | |
| $(CH_3)_2SiCl_2$-Ausbeute g/h | 0,63 | 0,97 | 1,10 | 0,90 | 0,54 | 0,56 | 0,15 | 4,9 |

# 0 001 995

### Patentansprüche

1. Verfahren zur Herstellung von Katalyt-Kupfer mit einer mittleren Korngröße zwischen 0,1 und 100 µm und einem Kupfer-(I)-oxid-Gehalt von 3 bis 100% durch Oxidation eines Cu-Pulvers, dadurch gekennzeichnet, daß die Oxidation bei einem gegenüber dem der Luft verminderten Sauerstoffpartialdruck vorgenommen wird, wobei entweder Sauerstoff im Gemisch mit weiteren Gasen benutzt wird und diese Gase sowohl inert sein oder auch selbst eine oxidierende Wirkung besitzen können und der Sauerstoffgehalt im Gasgemisch zwischen 0,1 und 15 Vol.-% beträgt oder daß als Oxidationsmittel Sauerstoff bei einem Druck von 0,001 bis 0,2 bar verwendet wird.

2. Verfahren nach Anspruch 1, dadurch gekennzeichnet, daß die Oxidation bei einer Temperatur zwischen 100 und 1000°C durchgeführt wird.

3. Verfahren nach Anspruch 1 oder 2, dadurch gekennzeichnet, daß die Verweilzeit des Cu-Pulvers in der Oxidationszone zwischen 2 Sekunden und 120 Minuten beträgt.

4. Verwendung eines Katalysators, hergestellt nach einem der Ansprüche 1 bis 3 für die Rochow-Synthese.

5. Katalyt-Kupfer mit einem Kupfer-(I)-oxid-Gehalt von 3 bis 100% une einer mittleren Korngröße von 0,1 bis 100 µm, hergestellt nach einem Verfahren gemäß einem der Ansprüche 1 bis 3.

### Revendications

1. Procédé de fabrication d'un catalyseur au cuivre ayant une grosseur de grain moyenne comprise entre 0,1 et 100 µm et une teneur en oxyde de cuivre-(I) de 3 à 100% par oxydation d'une poudre de cuivre, caractérisé en ce qu'on entreprend l'oxydation à une pression partielle d'oxygène plus basse par rapport à celle de l'air, soit en utilisant l'oxygène en mélange avec d'autres gaz, lesquels gaz peuvent être inertes ou même posséder eux-mêmes une action oxydante, la teneur en oxygène dans le mélange gazeux s'élevent entre 0,1 et 15% en volume, soit en utilisant comme agent oxydant de l'oxygène sous une pression de 0,001 à 0,2 bar.

2. Procédé selon la revendication 1, caractérisé en ce qu'on exécute l'oxydation à une température entre 100 et 1000°C.

3. Procédé selon l'une quelconque des revendications 1 et 2, caractérisé en ce que le temps de séjour de la poudre de cuivre dans la zone d'oxydation est compris entre 2 secondes et 120 minutes.

4. Utilisation d'un catalyseur préparé selon l'une quelconque des revendications 1 à 3 pour la synthèse de Rochow.

5. Catalyseur au cuivre ayant une teneur en oxyde de cuivre-(I) de 3 à 100% et une grosseur de grain moyenne de 0,1 à 100 µm, préparé par un procédé selon l'une quelconque des revendications 1 à 3.

### Claims

1. Process for the preparation of catalytic copper with an average particle size of between 0.1 and 100 µm and a copper (I) oxide content of 3 to 100% by oxidation of a Cu powder, characterised in that the oxidation is carried out with oxygen at a reduced partial pressure compared with that of air, wherein either oxygen is used in admixture with other gases and these gases can either be inert or can also themselves have an oxidizing action and the oxygen content in the gas mixture is between 0.1 and 15% by volume of oxygen under a pressure of 0.001 to 0.2 bars is used as the oxidizing agent.

2. Process according to Claim 1, characterised in that the oxidation is carried out at a temperature between 100 and 1000°C.

3. Process according to Claim 1 or 2, characterised in that the residence time of the Cu powder in the oxidation zone is between 2 seconds and 120 minutes.

4. Use of a catalyst, produced according to one of Claims 1 to 3 for the Rochow synthesis.

5. Catalytic copper with a copper (I) oxide content of 3 to 100% and an average particle size of 0.1 to 100 µm, produced by a process according to one of Claims 1 to 3.